Europäisches Patentamt

European Patent Office

Office européen des brevets

(11) Veröffentlichungsnummer: **0 287 087**
**A2**

## EUROPÄISCHE PATENTANMELDUNG

(21) Anmeldenummer: 88105921.6

(22) Anmeldetag: 14.04.88

(51) Int. Cl.⁴: **C08J 9/02**

(30) Priorität: 16.04.87 DE 3713130

(43) Veröffentlichungstag der Anmeldung:
**19.10.88 Patentblatt 88/42**

(84) Benannte Vertragsstaaten:
**DE FR GB IT**

(71) Anmelder: **WACKER-CHEMIE GMBH**
**Prinzregentenstrasse 22**
**D-8000 München 22(DE)**

(72) Erfinder: **Weise, Carlos, Dr. Dipl.-Chem.**
**Brucknerstrasse 41 b**
**D-8263 Burghausen(DE)**

(54) **Zu elastomeren Schaumstoffen härtbare Massen auf Polydiorganosiloxangrundlage.**

(57) Gegenstand der Erfindung sind zu elastomeren Schaumstoffen härtbare Massen auf Grundlage von Vinylgruppen aufweisenden Polydiorganosiloxanen (A), Polyorgano-H-siloxanen (B), Platinkatalysatoren (C) und einem
gesättigten mehrwertigen Alkohol mit mindestens zwei Hydroxylgruppen je Molekül (D) als wesentlichen
Bestandteilen, die ggf. Füllstoffe, Härtungskatalysatoren und andere übliche Zusätze enthalten können. Die
Massen können in bekannter Weise bei Temperaturen im Bereich von Raumtemperatur bis zu mehr als 100°C
durch Vernetzung mittels Addition der Si-gebundenen H-Atome in (B) an die Vinylgruppen in (A) mit Hilfe der
Platinkatalysatoren (C) unter gleichzeitiger Verschäumung zu den elastomeren Schaumstoffen gehärtet werden,
wobei die Verschäumung durch die ausgewählte Hydroxylgruppen aufweisende Verbindung (D) als "Treibmittel"
gut kontrolliert werden kann.

EP 0 287 087 A2

## Zu elastomeren Schaumstoffen härtbare Massen auf Polydiorganosiloxangrundlage

Zu elastomeren Schaumstoffen härtbare Massen auf Polydiorganosiloxangrundlage sind bekannt. Für die Herstellung derartiger Schaumstoffe werden härtbare Massen mit gasbildenden Zusätzen versetzt, die während der Härtungsreaktion ein gleichmäßiges Verschäumen der Massen bewirken. Bei der durch Platin oder Platinverbindungen katalysierten Härtungsreaktion auf Basis von Hydroxylgruppen aufweisenden Polydiorganosiloxanen und Polyorgano-H-siloxanen wird beispielsweise Wasserstoff entwickelt, der die Verschäumung einleitet. Derartige härtbare Massen können zusätzlich Vinylgruppen aufweisende Polydiorganosiloxane beispielsweise in Mengen bis zu etwa 85 Gew.-% enthalten, die üblicherweise zu verbesserten Festigkeitseigenschaften der fertigen Schaumstoffe führen, sowie andere in durch Platin katalysierten Massen übliche Zusätze, wie Füllstoffe und Härtungsinhibitoren, z.B. Acetylenverbindungen, die eine vorzeitige Härtung verhindern und die Topfzeit der Massen verlängern sollen (vgl. US-A-3 923 705, die der DE-A-25 48 510 entspricht). In diesem Fall wirken die Hydroxylgruppen aufweisenden Polydiorganosiloxane als "Treibmittel" und sind für die Bildung des "Treibgases" $H_2$ verantwortlich. Da diese Verbindungen aber selbst Polymere und an der Härtungsreaktion durch Vernetzung mittels Kondensation unmittelbar beteiligt sind, ist die Schaumbildung unter diesen Bedingungen nur schwierig zu kontrollieren.

Bessere Kontrollbedingungen werden erreicht, wenn in den durch Platin katalysierten Massen die Hydroxylgruppen aufweisenden Polydiorganosiloxane, die als Treibmittel wirken, ganz oder teilweise durch organische einwertige Alkohole ersetzt werden und die Härtungsreaktion vorwiegend auf Basis von Vinylgruppen aufweisenden Polydiorganosiloxanen und Polyorgano-H-siloxanen durch Vernetzung mittels Addition erfolgt (vgl. US-A 4 026 843 und US-A 4 026 844, die der DE-A26 31 299 entspricht). Darüberhinaus ist auch bekannt, in derartigen Massen als Hydroxylgruppen aufweisende Verbindung Wasser zu verwenden (vgl. US-A 4 189 545, die der DE-A 29 06 214 entspricht).

Härtbare Massen auf Polyorganosiloxangrundlage im Gemisch mit insbesondere niedrigen, einwertigen Alkoholen sind jedoch in unerwünschter Weise entflammbar und erfordern zusätzliche Sicherheitsmaßnahmen für den Transport und bei der Verarbeitung der Massen. Wasser enthaltende Polyorganosiloxangemische sind hingegen aufgrund der schlechten Mischbarkeit nur begrenzt lagerbeständig. Diese Nachteile werden auch nicht durch Verminderung der Vernetzungsstellen in derartigen härtbaren Massen behoben, die durch Auswahl spezieller Polyorgano-H-siloxane erreicht werden soll (vgl. DE-A 34 43 677, die der EP-A 183 148 entspricht).

Aufgabe der Erfindung ist es daher, zu elastomeren Schaumstoffen härtbare Massen auf Grundlage von Vinylgruppen aufweisenden Polydiorganosiloxanen (A), Polyorgano-H-siloxanen (B), Platin-Katalysatoren (C) und einer Hydroxylgruppen aufweisenden Verbindung (D) als wesentliche Bestandteile zur Verfügung zu stellen, die gegebenenfalls Füllstoffe, Härtungsinhibitoren und andere übliche Zusätze enthalten können, in welchen die einzelnen Komponenten gut mischbar sind, so daß die Massen lagerbeständig sind und durch geringe Brennbarkeit der Zusammensetzung sicher und ohne Veränderung der Eigenschaften verarbeitet werden können.

Diese Aufgabe wird erfindungsgemäß dadurch gelöst, daß die Massen alas Verbindung (D) einen gesättigten, mehrwertigen Alkohol mit mindestens zwei Hydroxylgruppen je Molekül enthalten.

Die Massen können in bekannter Weise bei Temperaturen im Bereich von Raumtemperatur bis zu mehr als 100°C durch Vernetzung mittels Addition der Si-gebundenen H-Atome in (B) an die Vinylgruppen in (A) mit Hilfe der Platinkatalysatoren (C) unter gleichzeitiger Verschäumung zu den elastomeren Schaumstoffen gehärtet werden, wobei die Verschäumung durch die ausgewählte Hydroxylgruppen aufweisende Verbindung (D) als "Treibmittel" gut kontrolliert werden kann.

Die erfindungsgemäß härtbaren Massen können beliebige Vinylgruppen aufweisende Polydiorganosiloxane (A) enthalten, beispielsweise solche mit endständigen Triorganosiloxygruppen und mindestens 2 Vinylgruppen je Molekül, die entlang der Kette angeordnet oder vorzugsweise endständig sind, und deren übrige Reste, die gleich oder verschieden sein können, Alkylreste mit 1 bis 8 C-Atomen, Arylreste oder Fluoralkylreste mit 3 bis 8 C-Atomen, vorzugswseise Methyl-, Phenyl-und/oder Trifluorpropylreste sind mit Viskositäten im Bereich von 200 bis 15 000 000 mPa.s/25°C.

Besonders bewährt haben sich endständige Vinyldimethylsiloxygruppen aufweisende Polydimethylsiloxane, die in Abhängigkeit von der vorgesehenen Verarbeitungsweise der härtbaren Massen z.B. als niedrigviskose Flüssigkeiten mit bis zu etwa 10 000 mPa.s/25°C oder als hochviskose, nicht mehr fließfähige Massen mit mehr als etwa 500 000 mPa.s/25°C für die Verarbeitung mit Hilfe von Extrudern oder Kalandern ausgewählt werden.

Als beliebige Polyorgano-H-siloxane (B) können die Massen beispielsweise solche mit linearer Struktur enthalten, die je Molekül mindestens 2 SiH-Gruppen aufweisen, welche entlang der Kette angeordnet oder endständig sein können und deren übrige organische Reste, die gleich oder verschieden sein können, Alkylreste mit 1 bis 8 C-Atomen, Arylreste oder Fluoralkylreste mit 3 bis 8 C-Atomen, vorzugsweise Methyl-, Phenyl-und/oder Trifluorpropylreste sind, mit Viskositäten im Bereich von 3 bis 10 000 mPa.s/25°C.

Besonders bewährt haben sich endständige Trimethylsiloxygruppen aufweisende Polymethyl-H-siloxane mit Viskositäten von etwa 50 bis 500 mPa.s/25°C.

Als Platinkatalysatoren (C) können sie beliebige Platinverbindungen, beispielsweise Hexachloroplatinsäure oder Reaktionsprodukte von Hexachloroplatinsäure mit Olefinen oder mit Olefinresten aufweisenden Organosiliciumverbindungen, wie Vinylsiloxane, vorzugsweise Divinyltetramethyldisiloxan enthalten.

Die erfindunggsgemäß als "Treibmittel" verwendeten Hydroxylgruppen aufweisenden Verbindungen (D) können beliebige gesättigte mehrwertige Alkohole sein, worunter organische Verbindungen, die mindestens zwei alkoholische Hydroxylgruppen je Molekül enthalten und frei von C = C-Mehrfachbindungen, Carbonylgruppen, sowie von Si-Atomen sind, zu verstehen sind.

Beispiele für aliphatische mehrwertige Alkohole sind Glykole, wie Ethylenglykol (1,2-Ethandiol), Propylenglykol (2,3-Propandiol), Trimethylenglykol (1,3-Propandiol), Dimethylethylenglykol (2,3-Butandiol), Tetramethylenglykol (1,4-Butandiol), Pentamethylenglykol (1,5-Pentandiol) und Hexamethylenglykol (1,6-Hexandiol), Glycerin (1,2,3-Propantriol), 2,2-Bis-hydroxymethyl-1-butanol, Tetrite, wie Erythrit und Pentaerythrit (2,2-Bis-hydroxymethyl-1,3-propandiol), Pentite, wie Arabit, Xylit und Methylpentit und Hexite, wie Mannit und Sorbit. Beispiele für cycloaliphatische mehrwertige Alkohole sind Cyclohexandiole, Cyclohexantriole und Inosit. Aufgrund der leichten Verfügbarkeit sind aliphatische 2-und 3-wertige Alkohole, wie Ethylenglykol und Glycerin bevorzugt.

In den erfindungsgemäß härt-und verschäumbaren Massen werden die wesentlichen Bestandteile (A) bis (D) beispielsweise in folgenden Mengen eingesetzt:

100 Gew.-Tl. Vinylgruppen aufweisende Polydiorganosiloxane (A),

0,01 bis 50 Gew.-Tl. Polyorgano-H-siloxane (B), wobei je Vinylgruppe in (A) mindestens eine SiH-Gruppe vorhanden sein muß,

0,1 bis 200 vorzugsweise 0,5 bis 200 ppm Platin als Platinkatalysator (C) und

0,01 bis 10 Gew.-Tl. des gesättigten mehrwertigen Alkohols (D), wobei die Gewichtsmenge von (D) vorteilhaft so bemessen wird, daß auf jeweils 100 Gew.-Tl. (A) ein Hydroxylgruppengehalt von 0,05 bis 2 Gew.-Tl. vorhanden ist.

Außer den wesentlichen Bestandteilen (A) bis (D) können die erfindungsgemäß härt-und verschäumbaren Massen noch folgende Bestandteile enthalten:

Da üblicherweise elastomere Schaumstoffe ohne Füllstoffzusatz nur geringe Festigkeitseigenschaften zeigen, können sowohl verstärkende, als auch nicht verstärkende Füllstoffe in die Massen eingearbeitet werden. Beispiele für verstärkende Füllstoffe sind pyrogen gewonnene oder gefällte Siliciumdioxidarten mit einer spezifischen Oberfläche von mindestens 50 m²/g, gemessen nach BET, hochaktive Rußsorten, sowie anorganische und organische Fasern. Die Siliciumdioxidarten können mit Silanisierungsmitteln vorbehandelt werden, wie Hexamethyldisilazan oder Divinyltetramethyldisilazan. Damit wird eine Beladung der Füllstoffoberfläche mit Triorganosilylgruppen erreicht und die Dispergierbarkeit der Füllstoffe in der Masse verbessert.

Beispiele für nicht verstärkende Füllstoffe sind Quarzmehl, Diatomeenerden, Titandioxid, Calciumcarbonat und Talkum.

Die verstärkenden Füllstoffe werden vorteilhaft in Mengen von 5 bis 40 Gew.-Tl. und die nicht verstärkenden Füllstoffe vorteilhaft in Mengen von 5 bis 150 Gewichsteilen, auf jeweils 100 Gewichtsteile des Vinylgruppen aufweisenden Polydiorganosiloxans (A) eingesetzt.

Wenn für die härt-und verschäumbaren Massen eine längere Topfzeit für die Verarbeitung und/oder die Durchführung der Härtung bei erhöhter Temperatur gewünscht wird, können in bekannter Weise sogenannte Härtungsinhibitoren mitverwendet werden. Beispiele hierfür sind Benzotriazol, Vinylgruppen aufweisende Cyclosiloxane oder mit Alkinylgruppen substituierte organische oder siliciumorganische Verbindungen, wie 3-Methyl-1-butinol und 1-Ethinyl-1-cyclohexanol. Die einzusetzenden Mengen sind abhängig von der eingesetzten Platinmenge und der gewünschten Härtungscharakteristik. Üblicherweise werden je ppm Platin mindestens 1 ppm des Inhibitors benötigt.

Außerdem können noch weitere Zusatzstoffe enthalten sein, wie anorganische oder organische Pigmente, Antioxidantien, Hitzestabilisatoren und Mittel zur Verbesserung der elektrischen Eigenschaften.

Die einzelnen Bestandteile der härt-und verschäumbaren Massen können auf beliebige Weise miteinander vermischt werden, beispielsweise in Rührwerken, Mischern, Knetern oder Walzwerken.

Da meist auch bei Mitverwendung voin Härtungsinhibitoren eine bereits bei Raumtemperatur beginnende vorzeitige Härtung nicht ausgeschlossen werden kann, ist es bei Lagerung vorteilhaft, die Gemische getrennt zu verpacken und zwar derart, daß die Platinkatalysatoren (C) und die Polyorgano-H-siloxane (B) in verschiedenen Behältern aufbewahrt werden. Bei der Verarbeitung zu den elastomeren Schaumstoffen werden die Massen in bekannter Weise vermischt und die Gemische bei Temperaturen im Bereich von vorzugsweise 100° bis 200°C unter gleichzeitiger Verschäumung bis zur Bildung von beispielsweise Beschichtungen, Schaumextrudaten oder Schaumformteilen gehärtet.

Beispiel:

100 Gew.-Tl. eines endständige Vinyldimethylsiloxygruppen aufweisenden Polydimethylsiloxans mit einer Viskosität von 100 000 mPa.s/25°C wurden mit 20 Gew.-Tl. eines pyrogen gewonnenen Siliciumdioxids, das eine spezifische Oberfläche von 200 m²/g, gemessen nach BET hatte und mit Hexamethyldisilazan behandelt worden ist, vermischt. Die so erhaltene fließfähige Mischung wurde mit 5 ppm einer Platin-Divinyltetramethyldisiloxan-Komplexverbindung, 0,06 Gew.-Tl. 3-Methyl-1-butinol, 0,2 Gew.-Tl. eines endständige Trimethylsiloxygruppen aufweisenden Polymethyl-H-siloxans mit einer Viskosität von 150 mPa.s/25°C und 0,5 Gew.-Tl. Glycerin vermischt. Der Flammpunkt des so erhaltenen Gemisches in ungehärtetem Zustand betrug >146°C, gemessen nach der Vorschrift DIN 51 376. Dieses Gemisch wurde in eine Form gegossen und in einem Ofen bei 150°C 10 Minuten gehärtet. Nach dem Abkühlen und Entnahme aus dem Ofen wurde eine Verdopplung des Volumens gegenüber der ursprünglich eingesetzten Masse festgestellt und der so erhaltene elastomere Schaumstoff zeigte eine gleichmäßige Porenstruktur mit im wesentlichen geschlossenen Poren, war hochflexibel, mechanisch reißfest und geruchlos. Die Schaumdichte betrug 0,5 g/cm³.

Bei Einsatz anderer mehrwertiger Alkohole anstelle von Glyzerin wurden unter sonst gleichen Bedingungen ebenfalls elastomere Schaumstoffe mit im wesentlichen geschlossenen Poren erhalten.

Art und Menge der mehrwertigen Alkohole und die erzielte Schaumdichte sind in der folgenden Tabelle zusammengestellt:

## Tabelle

| Gew.-Tl. | mehrwertiger Alkohol | Schaumdichte in g/cm³ |
|---|---|---|
| 0,5 | 1,2-Ethandiol | 0,5 |
| 0,5 | 2,2-Bis-hydroxy-methyl-1-butanol | 0,6 |
| 0,5 | 2,2-Bis-hydroxy-methyl-1,3-propandiol | 0,3 |

**Ansprüche**

1. Zu elastomeren Schaumstoffen härtbare Massen auf Grundlage von Vinylgruppen aufweisenden Polydiorganosiloxanen (A), Polyorgano-H-siloxanen (B), Platinkatalysatoren (C) und einer Hydroxylgruppen aufweisenden Verbindung (D) als wesentliche Bestandteile, ggf. Füllstoffen, Härtungsinhibitoren und anderen üblichen Zusätzen, dadurch gekennzeichnet, daß sie als Verbindung (D) einen gesättigten, mehrwertigen Alkohol mit mindestens zwei Hydroxylgruppen je Molekül enthalten.

2. Massen nach Anspruch 1, dadurch gekennzeichnet, daß sie als Verbindung (D) einen aliphatischen, zwei-oder dreiwertigen Alkohol enthalten.

3. Massen nach Anspruch 2, dadurch gekennzeichnet, daß sie als zwei-oder dreiwertigen Alkohol Ethylenglykol oder Glycerin enthalten.

4. Massen nach Anspruch 1, die als wesentliche Bestandteile 100 Gew.-Tl. Vinylgruppen aufweisende Polydiorganosiloxane (A), 0,01 bis 50 Gew.-Tl. Polyorgano-H-siloxane (B), 0,1 bis 200 ppm Platin als Platinkatalysator (C) und 0,01 bis 10 Gew.-Tl. des gesättigten mehrwertigen Alkohols (D) enthalten, wobei die Gewichtsmenge von (D) so bemessen ist, daß auf jeweils 100 Gew.-Tl. (A) ein Hydroxylgruppengehalt von 0,05 bis 2,0 Gew.-Tl. vorhanden ist.

5. Verfahren zur Herstellung von elastomeren Schaumstoffen auf Polydiorganosiloxangrundlage durch Vernetzung mittels Addition, dadurch gekennzeichnet, daß 100 Gew.-Tl. Vinylgruppen aufweisende Polydiorganosiloxane (A), 0,01 bis 50 Gew.-Tl. Polyorgano-H-siloxane (B), 0,1 bis 200 ppm Platin als Platinkatalysator (C), 0,01 bis 10 Gew.-Tl. eines gesättigten, mehrwertigen Alkohols (D) 0 bis 40 Gew.-Tl. verstärkende Füllstoffe und 0 bis 150 Gew.-Tl. nicht verstärkende Füllstoffe miteinander vermischt und die Gemische bei Temperaturen im Bereich von 100° bis 200°C unter gleichzeitiger Verschäumung zu den elastomeren Schaumstoffen gehärtet werden.